# EUROPEAN PATENT APPLICATION

(11) **EP 3 220 470 A1**
(43) Date of publication of application: **20.09.2017**
(21) Application number: 15859002.6
(22) Date of filing: 10.04.2015
(51) Int. Cl.: H01M 10/44

(54) **FAST CHARGING METHOD FOR LITHIUM BATTERY OF DIRECT-CURRENT BRUSHLESS MOTOR DRIVE SYSTEM**

(30) Priority: 11.11.2014 CN 201410630146
(71) Applicant: Changzhou Globe Co., Ltd., Jiangsu 213023 (CN)
(72) Inventor: WANG, Dehong, Chang Zhou Jiangsu 213023 (CN); LIAO, Hui, Chang Zhou Jiangsu 213023 (CN); PENG, Lijun, Chang Zhou Jiangsu 213023 (CN)
(74) Representative: Becker Kurig Straus
(86) International application number: PCT/CN2015/076226
(87) International publication number: WO 2016/074426

(57) **Abstract**

The present application discloses a method of quick charging a lithium battery for a brushless direct current motor drive system, including the steps: (1) a constant power charging stage; and (2) a linear charging stage. The above-mentioned method of quick charging a lithium battery for a brushless direct current motor drive system has the advantages of speeding up the charging process and reducing heat generation during the charging process so as to realize short charging time, and shorten the waiting time for battery charging. It has an extensive market prospect for the popularization of the method of quick charging a lithium battery for a brushless DC motor drive system.

## Description

### FIELD OF THE TECHNOLOGY

The present application relates to the field of battery charging, and more particularly to a method of quick charging a lithium battery for a brushless DC motor drive system.

### BACKGROUND

For power tools and garden tools using lithium battery packs as power supply, the battery capacity is limited. For working environment that needs long-term usage, lithium battery charging time is the key to determine whether the tools requiring electricity can more quickly be used continuously.

Power supply module is the core of a brushless DC motor drive system, such as power tools, outdoor garden tools, etc. Existing brushless DC motor drive systems mostly use lithium batteries as power supply. Traditional lithium battery's constant voltage constant current charging method adopts full period constant power charging method. At an initial stage, the current is large, and charging is quick. However, when the charging capacity is almost full, the lithium battery voltage is high, i.e. the remaining capacity is relatively high. The internal charge-storing cavity is small in proportion. If charging current is still very large, heating of the lithium battery will accelerate, and will damage the internal structure of the battery. The shortcomings are that charging time is long, the amount of heat generated from the battery is large, and the service life of the lithium battery is affected.

### SUMMARY

The technical problem to be solved is to provide a method of quick charging a lithium battery for a brushless DC motor drive system by adopting a constant power charging mechanism when the battery capacity is small, and using a linear charging method when the battery is almost fully charged. This can achieve quick trickle charging, and excellent protection of lithium characteristics of the battery. It has an extensive market prospect for the popularization of the method of quick charging a lithium battery for a brushless DC motor drive system.

To solve the above technical problem, one aspect is to provide a method of quick charging a lithium battery for a brushless DC motor drive system, including the steps of:
(1) in a constant power charging stage, setting a charging power P at the time of charging, calculating a charging current I = P / V according to a lithium battery voltage V being detected, and controlling the charging current I in a closed loop, the charging current decreasing with the voltage, and the power remaining unchanged during the charging stage, entering a linear charging stage when the lithium battery voltage V being detected reaches a starting point of the linear charging stage; and
(2) in the linear charging stage, when the voltage is still increasing, the current is decreasing in step form, and the power is also decreasing, dividing a start voltage point and an end voltage point in the linear charging stage into n points denoted as CV1, CV2, CV3,...CVn, where CV1 is an initial charging voltage and CVn is a final charging voltage, and simultaneously dividing a maximum charging current and a minimum charging current in the linear charging stage into n charging currents denoted as I1, I2, I3,... In, where I1 is an initial charging current and In is a final charging current,
   (a) resetting charging voltage CV to CV2, and simultaneously setting the charging current to 12, when charging with current I1 and the lithium battery voltage being detected reaches CV1,
   (b) resetting charging voltage CV to CV3, and simultaneously setting the charging current to 13, when charging with current 12 and the lithium battery voltage being detected reaches CV2,
   (c) and so on, until the lithium battery voltage reaches CVn-1, and
   (d) completing the linear charging stage and completing charging, when charging with current In, and the lithium battery voltage being detected reaches CVn.

In a preferred embodiment, in step (2), n is greater than 10.

In a preferred embodiment, in step (2), the final charging current is smaller than half of the initial charging current.

In a preferred embodiment, in step (2), the power decreases in step form.

The beneficial effects of the method of quick charging a lithium battery for a brushless DC motor drive system are that it can speed up the charging process and reduce heat generation during the charging process so as to realize short charging time, and shorten the waiting time for battery charging.

### BRIEF DESCRIPTION OF THE DRAWINGS

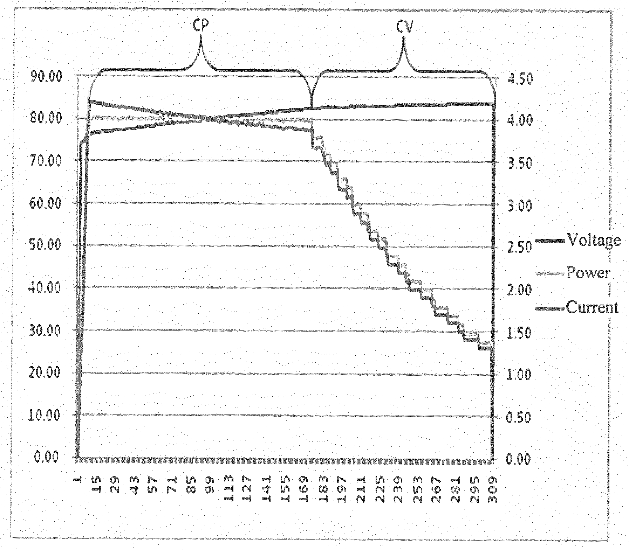

In order to more clearly illustrate the technical solution provided by the embodiments of the method of quick charging a lithium battery for a brushless DC motor drive system, the drawing to be used in the description of the embodiments will be briefly described below. It will be apparent that the drawing mentioned in the following description is merely an implementation of the method of quick charging a lithium battery for a brushless DC motor drive system. Without making any creative effort, a person skilled in the art may derive other drawings from the drawing in the present application, wherein:
The figure is a schematic diagram of charging voltage-current-power of a preferred embodiment of the method of quick charging a lithium battery for a brushless DC motor drive system.

### DETAILED DESCRIPTION

The technical solution provided by the embodiments of the method of quick charging a lithium battery for a brushless DC motor drive system of the present application will be described clearly and completely below. It is apparent that the described embodiments are only some embodiments, and are not intended to be exhaustive. All other embodiments obtained by an ordinary technical person skilled in the art, without making any creative effort, are within the scope of protection of the present application.

An embodiment of the method of quick charging a lithium battery for a brushless DC motor drive system may include the steps of:
(1) in a constant power charging stage, setting a charging power P at the time of charging, calculating a charging current I = P / V according to a lithium battery voltage V being detected, and controlling the charging current I in a closed loop, the charging current decreasing with the voltage, and the power remaining unchanged during the charging stage, entering a linear charging stage when the lithium battery voltage V being detected reaches a starting point of the linear charging stage; and
(2) in the linear charging stage, when the voltage is still increasing, the current is decreasing in step form, and the power is also decreasing, dividing a start voltage point and an end voltage point in the linear charging stage into n points denoted as CV1, CV2, CV3,...CVn, where CV1 is an initial charging voltage and CVn is a final charging voltage, and simultaneously dividing a maximum charging current and a minimum charging current in the linear charging stage into n charging currents denoted as II, I2, I3,... In, where I1 is an initial charging current and In is a final charging current,
   (a) resetting charging voltage CV to CV2, and simultaneously setting the charging current to 12, when charging with current I1 and the lithium battery voltage being detected reaches CV1,
   (b) resetting charging voltage CV to CV3, and simultaneously setting the charging current to 13, when charging with current 12 and the lithium battery voltage being detected reaches CV2,
   (c) and so on, until the lithium battery voltage reaches CVn-1, and
   (d) completing the linear charging stage and completing charging, when charging with current In, and the lithium battery voltage being detected reaches CVn.

Preferably, in step (2), n is greater than 10.

Preferably, in step (2), the final charging current is smaller than half of the initial charging current.

Preferably, in step (2), the power decreases in step form.

Using the method of quick charging lithium battery, it can ensure substantial shortening of battery charging time, as heat generated by charging the lithium battery is small. When battery capacity is small, constant power charging mechanism is adopted, i.e. low voltage high current, and high voltage low current. When lithium battery voltage is low, i.e. the remaining capacity is low, the internal charge-storing cavity is large in proportion. Then, a relatively large current can be used for charging. On the other hand, when lithium battery voltage is high, i.e. the remaining capacity is high, the internal charge-storing cavity is small in proportion. If large current is still used for charging, then heat generated from the lithium battery will accelerate, and it will damage the internal structure of the battery. Hence, there is a need to use low current charging. Constant power charging is able to achieve low voltage high current, and high voltage low current. When the battery is almost fully charged, then linear charging method is used. This can achieve quick trickle charging, and excellent protection of lithium characteristics of the battery.

The beneficial effects of the method of quick charging a lithium battery for a brushless DC motor drive system of the present application are that,
(1) by adopting constant power charging mechanism when battery capacity is small, one can ensure substantial shortening of battery charging time, as heat generated by charging the lithium battery is small;
(2) by using linear charging method when the battery is almost fully charged, one can achieve quick trickle charging, and excellent protection of lithium characteristics of the battery; and
(3) the method of quick charging a lithium battery for a brushless DC motor drive system of the present application can realize step-form charging method by constantly rectifying the initial and final charging voltages, and it can speed up the charging process and reduce heat generation during the charging process so as to realize short charging time, and shorten the waiting time for battery charging.

The above-mentioned embodiments are merely some embodiments of the method of quick charging a lithium battery for a brushless DC motor drive system of the present application, and the scope of patent protection is not limited to these embodiments. Any equivalent structures or equivalent changes of process using the contents of the present patent specification, or any direct/indirect applications in other related field of technology are within the scope of patent protection of the present application.

## Claims

1. A method of quick charging a lithium battery for a brushless direct current motor drive system, comprising the steps of:
(1) in a constant power charging stage, setting a charging power P at the time of charging, calculating a charging current I = P / V according to a lithium battery voltage V being detected, and controlling the charging current I in a closed loop, the charging current decreasing with the voltage, and the power remaining unchanged during the charging stage, entering a linear charging stage when the lithium battery voltage V being detected reaches a starting point of the linear charging stage; and
(2) in the linear charging stage, when the voltage is still increasing, the current is decreasing in step form, and the power is also decreasing, dividing a start voltage point and an end voltage point in the linear charging stage into n points denoted as CV1, CV2, CV3,...CVn, where CV1 is an initial charging voltage and CVn is a final charging voltage, and simultaneously dividing a maximum charging current and a minimum charging current in the linear charging stage into n charging currents denoted as I1, I2, I3,... In, where I1 is an initial charging current and In is a final charging current,
(a) resetting charging voltage CV to CV2, and simultaneously setting the charging current to 12, when charging with current I1 and the lithium battery voltage being detected reaches CV1,
(b) resetting charging voltage CV to CV3, and simultaneously setting the charging current to 13, when charging with current 12 and the lithium battery voltage being detected reaches CV2,
(c) and so on, until the lithium battery voltage reaches CVn-1, and
(d) completing the linear charging stage and completing charging, when charging with current In, and the lithium battery voltage being detected reaches CVn.

2. The method of quick charging a lithium battery for a brushless direct current motor drive system according to claim 1, wherein, in step (2), n is greater than 10.

3. The method of quick charging a lithium battery for a brushless direct current motor drive system according to claim 1, wherein, in step (2), the final charging current is smaller than half of the initial charging current.

4. The method of quick charging a lithium battery for a brushless direct current motor drive system according to claim 1, wherein, in step (2), the power decreases in step form.
